# FASCICULE DE BREVET EUROPEEN

(11) **EP 1 461 967 B1**
(45) Date de publication et mention de la délivrance du brevet: **19.03.2008**
(21) Numéro de dépôt: 02781558.8
(22) Date de dépôt: 20.11.2002
(51) Int. Cl.: H04Q 7/22

(54) **METHODE DE CONTROLE D'ACCES A DES SERVICES SPECIFIQUES PAR UN DIFFUSEUR**
VERFAHREN ZUR ZUGRIFFSKONTROLLE ÜBER SPEZIFISCHEN DIENSTE VIA EINEM VERTEILER
METHOD FOR CONTROLLING ACCESS TO SPECIFIC SERVICES FROM A BROADCASTER

(30) Priorité: 21.11.2001 CH 214301
(43) Date de publication de la demande: 29.09.2004
(73) Titulaire: Nagravision SA, 1033 Cheseaux-sur-Lausanne (CH)
(72) Inventeur: COLLET, Jean-François, F-01220 Divonne-les-Bains (FR)
(74) Mandataire: Wenger, Joel-Théophile
(86) Numéro de dépôt international: PCT/IB2002/004861
(87) Numéro de publication internationale: WO 2003/045085

(56) Documents cités:
- EP-A- 1 037 434
- WO-A-01/63844
- GB-A- 2 356 530
- US-A- 5 471 532
- US-A- 5 940 512
- BEHEIM J: "SAFETY FIRST BEI EUROPAWEITER MOBILKOMMUNIKATION" TELCOM REPORT, SIEMENS AG. MUNCHEN, DE, vol. 16, no. 6, 1 novembre 1993 (1993-11-01), pages 326-329, XP000425541 ISSN: 0344-4724

## Description

La présente invention est du domaine du contrôle d'accès à des services télédiffusés, en particulier lors du déplacement d'un utilisateur entre plusieurs réseaux.

Sur les réseaux de télécommunication de type de téléphonie mobile, les utilisateurs peuvent se déplacer d'une zone couverte par leur opérateur de base vers une zone couverte par un opérateur tiers grâce aux accords de "roaming" entre opérateurs tels que définit dans la norme GSM.

Lorsqu'un utilisateur se connecte sur un réseau tiers, une procédure de vérification complexe est initiée afin de déterminer les droits de cet utilisateur. Cette procédure est bien connue et utilisée dès lors que l'on souhaite bénéficier de la fonction "roaming".

Un exemple de ce processus d'authentification est décrit dans le document US 5'940'512 dans lequel un terminal mobile transmet une requête à un opérateur d'itinérance avec son numéro unique (MSN). Cet opérateur transmet une demande d'authentification à l'opérateur d'origine de ce terminal grâce au numéro unique MSN. En retour, l'opérateur d'origine envoie à l'opérateur d'itinérance la clé d'authentification du terminal concerné, clé qui permettra d'authentifier le terminal mobile.

Le téléphone portable se voit agrémenter par d'autres applications pour offrir à la clientèle des fonctions attractives telles que la diffusion de contenu musicaux ou vidéo par exemple, des données boursières ou météorologiques.

Nous décomposerons la gestion de ces services comme suit:
- Le diffuseur de contenu (réseau de diffusion) qui propose ces services additionnels et les diffuse par des moyens tels que par ondes hertziennes. Cette diffusion est mono directionnelle.
- L'opérateur de téléphonie mobile (réseau de communication) dont la caractéristique est d'établir une liaison bidirectionnelle.
- L'opérateur d'accès conditionnel qui délivre les moyens d'autorisation pour l'accès aux services transmis par le diffuseur de contenu. Il est donc en étroite liaison avec les deux opérateurs cités précédemment d'une part pour transmettre les clés de décryption aux utilisateurs et les clés d'encryption au diffuseur pour assurer le synchronisme entre encryption et décryption.

Il est à noter que ces opérateurs peuvent être la même entité commerciale.

Ces services étant sujets à un abonnement, voire au paiement de l'utilisation au coup par coup, le flux numérique est encrypté et géré par un système qui est propre à l'opérateur de diffusion. Dès lors que l'utilisateur quitte la zone de diffusion de cet opérateur, il n'a plus accès à ces services car la gestion des clés et des droits dans les modules de sécurité sont propres à cet opérateur de diffusion. Même si des services équivalents sont disponibles auprès d'un autre opérateur de diffusion, il ne pourra y accéder.

Ceci peut être un frein à la souscription à des services annexes dès lors que l'utilisateur sait que ces services seront inaccessibles hors de la zone de cet opérateur de diffusion.

Dans la diffusion de contenu encrypté, on distingue deux types de messages:

L'ECM qui est un message encrypté qui contient la description du service et un mot de contrôle (CW) qui est la clé pour décrypter le contenu du service encrypté. Ces ECM peuvent être décryptés par la carte à puce si celle-ci possède la clé de transmission.

L'EMM est un message encrypté qui charge le droit correspondant à un produit ainsi que la clé de transmission pour décrypter les ECM.

Les EMM sont propres au système de contrôle d'accès CA de l'opérateur car chaque opérateur désire garder le contrôle de cette partie sensible.

Selon l'exemple du document US 5'940'512, la connaissance de la clé secrète du terminal mobile n'est d'aucun intérêt car le service annexe est encrypté selon des clés communes à tous les terminaux. Ce type de service spécifique diffère d'un service de téléphonie dans le sens qu'il est essentiellement unidirectionnel et il n'est pas possible d'utiliser la clé secrète de chaque utilisateur pour encrypter ces services. De plus, il n'est pas souhaitable que les clés secrètes de tous les utilisateurs quittant leur opérateur d'origine soient distribuées vers les autres opérateurs.

C'est pourquoi le but de la présente invention est de proposer une méthode permettant de conserver l'accès à ces services spécifiques tout en quittant la zone de diffusion de son opérateur de diffusion de base.

Ainsi, cette invention se réfère à une méthode contrôle d'accès d'une diffusion par un diffuseur B de services spécifiques encryptés par des mots de contrôle CW, les droits d'accès DB à ces services étant gérés par un centre de contrôle d'accès CAB, ces droits DB, comprenant une clé de transmission TB permettant de décrypter les mots de contrôle CW, cette diffusion étant reçue par un appareil mobile A connecté à une unité de sécurité SM qui comprend un numéro d'identification unique UA et une clé de sécurité KA pour la transmission d'information sécurisée, cet appareil A étant relié un opérateur de téléphonie B et initialement enregistré sur un autre centre de contrôle d'accès CAA, pour la réception de services spécifiques, cette méthode consistant à:
- transmettre par le diffuseur B une description de services sur l'appareil A,
- transmettre par l'appareil A, la commande d'un service à l'opérateur B, cette commande étant accompagnée du numéro d'identification unique UA de l'appareil A,
- transmettre cette commande au centre de contrôle d'accès CAB,
- transmettre par le centre de contrôle d'accès CAB le droit d'accès DB et le numéro unique UA au centre de contrôle d'accès CAA,
- composer par le centre de contrôle d'accès CAA un message EMM comprenant le droit DB encrypté par la clé de sécurité KA,
- transmettre à l'opérateur B ce message pour qu'il soit transmit à l'appareil A,
- décrypter ce message EMM par l'unité de sécurité SM au moyen de la clé de sécurité KA et stocker la clé de transmission TB et le droit d'accès au service dans l'unité de sécurité SM,
- décrypter les mots de contrôle CW du service spécifique dans l'unité de sécurité SM grâce à la clé de transmission TB.

Ainsi, c'est l'opérateur A qui seul peut transmettre un message qui puisse mettre à jour un droit dans l'unité de sécurité de l'utilisateur A grâce à la liaison bidirectionnelle avec l'utilisateur A. Cela lui permet de conserver une trace de la transaction pour la facturation du service.

De plus, selon une première variante, l'unité de sécurité SM de l'appareil utilisateur A permettant l'accès au réseau de l'opérateur de téléphonie A sert également au contrôle d'accès aux services spécifiques. Les moyens d'encryption et de mise à jour de cette unité sont gérés par l'opérateur A par une clé KA sécurisant la transmission. Dans ce cas, le centre de contrôle d'accès CAA transmet le message EMM avant son encryption par la clé KA à l'opérateur A qui seul dispose de cette clé. Le centre de contrôle d'accès CAA transmet ce message avec le numéro d'identification unique UA.

Selon une autre variante, l'unité de sécurité SM est propre aux services spécifiques et le canal de transmission de l'opérateur A ne sert qu'à transférer les données vers cette unité. Dans ce cas, la clé KA est gérée par le centre de contrôle d'accès CAA.

En effet, le centre de contrôle d'accès CAB ne dispose pas de la clé pour encrypter un message sécurisé pour l'unité de sécurité de l'utilisateur A et c'est pourquoi ce message est encrypté par le centre de contrôle d'accès CAA.

Par l'implémentation d'un algorithme commun pour l'encryption du contenu basé sur des mots de contrôle CW et d'un standard commun pour la clé de transmission ainsi que pour la description du service et du droit correspondant, il est possible de proposer des services spécifiques par différents opérateurs.

Ainsi les messages ECM selon l'invention contiennent une partie commune (standard) à chaque opérateur et une partie privée pour les applications spécifiques à chaque système d'accès conditionnel (CA).

Les données échangées entre les centres de contrôle d'accès CAA et CAB sont de préférence encryptés.

Selon une première variante de l'invention, les services spécifiques sont diffusés par l'opérateur de téléphonie lui-même par les canaux de téléphonie mobile standards. Il remplit dès lors la fonction de diffuseur, de centre de contrôle d'accès et d'opérateur. Dans cette configuration des services d'informations sont proposés tels que des données boursières, de météo ou de trafic routier. Ces données sont avantageusement transmises par des messages SMS.

Selon une seconde variante de l'invention, les services spécifiques sont transmis par une voie annexe à celle de la téléphonie mobile et reçu par un récepteur adéquat. Ceci est notamment le cas de la diffusion de musique ou autres données numériques sur des canaux différents de ceux utilisés par la téléphonie. Ces canaux de diffusion par définition ne possèdent pas de voie de retour pour un dialogue entre un centre de gestion et le récepteur. C'est pourquoi la gestion d'un utilisateur se fait par le moyen du canal de téléphonie mobile par lequel transitent les données de l'utilisateur, données servant également à l'identifier. Inversement, ce canal permet la transmission des droits contenant la clé de transmission, et permet de transmettre les services consommés pour comptabilisation. Le récepteur numérique du contenu encrypté transmet les messages ECM contenant les clés de décryption vers l'unité de sécurité de l'utilisateur. Grâce à la clé de transmission TB, ces messages sont décryptés et les clés retournées au récepteur pour décrypter le contenu.

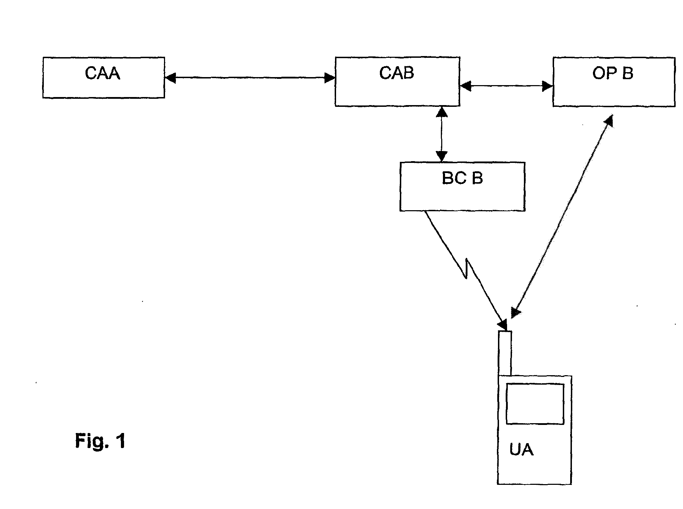

L'invention sera mieux comprise grâce à la description détaillée qui va suivre et qui se réfère à la figure unique qui est donné à titre d'exemple nullement limitatif, à savoir un bloc diagramme montrant les différents éléments lors d'un déplacement d'un utilisateur vers une zone de diffusion d'un autre opérateur.

Sur cette figure, est illustré le centre de contrôle d'accès de base CAA de l'utilisateur A qui dispose des moyens pour mettre à jour les droits dans l'unité de sécurité SM de l'appareil A.

Le centre de contrôle d'accès CAB travaille en étroite collaboration avec le diffuseur BC B pour la diffusion de services spécifiques, tel que de la musique ou données numériques. Ce flux de données est encrypté par des mots de contrôle CW qui servent de clés de d'encryption durant un temps donné (par exemple 10 secondes). Ces mots de contrôles sont contenus dans un message ECM encrypté par une clé de transmission TB généralement produite par le centre de contrôle CAB. Cette méthode est bien connue et utilisée depuis longtemps dans la transmission de télévision à péage.

Une fois la clé de transmission dans l'unité de sécurité, les messages ECM sont décryptés grâce à cette clé de transmission TB et les mots de contrôle CW sont retournés au récepteur pour décrypter le flux numérique.

Lorsque l'utilisateur A désire accéder au service proposé par le diffuseur BC B, la requête est transmise de l'utilisateur A par l'opérateur OP B qui dispose d'un canal de communication avec cet utilisateur. Cette requête est ensuite transmise vers le centre de contrôle CAB avec les indications nécessaires pour identifier cet utilisateur. Ces informations sont, entre autre, son unique adresse UA qui permet d'identifier avec certitude l'utilisateur A. Du fait que l'utilisateur A n'est pas connu du centre de contrôle CAB, une liaison s'établit avec le centre de contrôle CAA pour préparer un message EMM dont les caractéristiques sont déterminées par le centre de contrôle de base CAA.

Le centre de contrôle CAB transmet à cet effet la description du droit d'accès au service souhaité contenant la clé de transmission TB.

Le centre de contrôle CAA compose le message EMM qui comprend le droit correspondant, ce message étant encrypté par une clé de sécurité KA propre à l'utilisateur A. Ce message est envoyé à l'opérateur B pour être transmis à l'utilisateur A.

Une fois le message EMM décrypté par la clé KA, et le droit DB stocké dans l'unité de sécurité de l'utilisateur A, il est possible de recevoir le service spécifique grâce à l'utilisation de la clé de transmission TB.

Il est à noter que la proposition des services peut être envoyées par l'opérateur B ou par le diffuseur B. La voie de retour est par contre limitée à l'opérateur B car le diffuseur n'a pas de moyens pour établir une liaison directe avec l'utilisateur. Néanmoins, si une telle voie devait être disponible, la commande du service spécifique pourrait être retournée au diffuseur B au lieu de l'opérateur B.

Cette méthode n'est pas limitée à la diffusion de services spécifiques hors de la zone de diffusion du diffuseur A de base mais peut également s'appliquer lorsque le contrôle d'accès à ce service est géré par un autre centre de contrôle CAB que celui auquel est abonné l'utilisateur A. Dans ce cas, la commande passe par l'opérateur A et son centre de contrôle d'accès CAA, puis est transmise au centre de contrôle d'accès CAB. Ce dernier retourne le droit au service demandé au centre de contrôle d'accès CAA puis à l'utilisateur A via l'opérateur A.

Par un abonnement complémentaire, il est possible pour l'opérateur A de proposer des services d'autres opérateurs (B par exemple) grâce à la méthode de l'invention.

Selon une manière particulière d'accès à ces services spécifiques, on peut imaginer que la clé de transmission TB est appelée à changer régulièrement, par exemple toutes les heures, l'utilisateur étant débité pour chaque heure de consommation. L'appareil de l'utilisateur peut générer automatiquement une commande si le récepteur est toujours réglé sur le service spécifique. L'opération décrite ci-dessus est alors effectuée sans que l'utilisateur ne s'en rende compte et la nouvelle clé de transmission TB' vient remplacer l'ancienne. L'opérateur B peut demander à chaque mise à jour de la clé de transmission TB un EMM à l'opérateur A. Celui-ci sera renvoyé à l'utilisateur soit par le signal de diffusion soit par le réseau téléphonique.

## Revendications

1. Méthode de contrôle d'accès d'une diffusion par un diffuseur B de services à spécifiques encryptés par des mots de contrôle CW et télédiffusés en mode monodirectionnel, les droits d'accès DB à ces services télédiffusés étant gérés par un centre de contrôle d'accès CAB, ces droits DB, comprenant une clé de transmission TB permettant de décrypter les mots de contrôle CW, , cette diffusion étant reçue par un appareil mobile A connecté localement à une unité de sécurité SM qui comprend un numéro d'identification unique UA et une clé de sécurité KA pour la transmission d'information sécurisée, cet appareil A étant relié à un opérateur de téléphonie B et initialement enregistré sur un autre centre de contrôle d'accès CAA, pour la réception de services spécifiques télédiffusés, cette méthode consistant à:
- transmettre par le diffuseur B une description de service sur l'appareil A,
- recevoir par l'opérateur B la commande d'un service provenant de l'appareil A et comprenant le numéro d'identification unique UA,
- transmettre cette commande au centre de contrôle d'accès CAB,
- transmettre par le centre de contrôle d'accès CAB le droit d'accès DB et le numéro unique UA au centre de contrôle d'accès CAA,
- composer par le centre de contrôle d'accès CAA un message EMM comprenant le droit DB encrypté par la clé de sécurité KA,
- transmettre à l'opérateur B ce message pour qu'il soit transmis à l'appareil A,
- décrypter ce message EMM par l'unité de sécurité SM au moyen de la clé de sécurité KA et stocker la clé de transmission TB et le droit d'accès au service dans l'unité de sécurité SM,
- décrypter les mots de contrôle CW du service spécifique dans l'unité de sécurité SM grâce à la clé de transmission TB.

2. Méthode de diffusion selon la revendication 1, **caractérisée en ce que** la proposition de service spécifique est transmise par l'opérateur B.

3. Méthode de diffusion selon la revendication 1, **caractérisée en ce que** la proposition de service spécifique est transmise par le diffuseur B.

4. Méthode de diffusion selon les revendications 1 à 3, **caractérisé en ce que** l'unité de sécurité est commune aux opérations de sécurité de l'opérateur et aux opérations de sécurité du diffuseur.

5. Méthode de diffusion selon les revendications 1 à 3, **caractérisé en ce que** l'unité de sécurité est propre aux opérations de sécurité du diffuseur.

6. Méthode selon l'une des revendications 1 à 5, **caractérisée en ce que** la zone de diffusion du diffuseur A est différente de la zone de diffusion de diffuseur B ainsi que les systèmes de contrôle d'accès (CAA, CAB) respectifs.

7. Méthode selon l'une des revendications précédentes **caractérisée en ce que** les données échangées entre l'opérateur A et l'opérateur B sont encryptées.

8. Méthode selon l'une des revendications précédentes **caractérisée en ce que** le système d'encryption, la description d'un service et du droit correspondant, le chiffrement d'un message (ECM) comprenant les mots de contrôle (CW) par une clé de transmission sont commun pour tous les diffuseurs.

## Claims

1. Control access method by a broadcaster B of specific services ciphered by control-words (CW) *and broadcasted in one way mode,* the access rights DB to these *broadcast* services being managed by an access control centre CAB, these rights DB, having a transmission key (TB) that allows the control-words CW to be deciphered, this broadcast being received by a mobile apparatus A locally connected to a security unit (SM) which comprises a unique identification number UA and a security key KA for protected information transmission, this apparatus A being linked to a telephony operator B and initially registered in another access control centre CAA for reception of specific *broadcast* services , this method consists of:
- transmitting by the provider B a description of services on the apparatus A,
- transmitting by the apparatus A, the request to subscribe to this service to the operator B, the request to this service and the unique identification number UA originating from the apparatus A,
- transmitting this request to the access control centre CAB,
- transmitting through the access control centre CAB the access right DB and the unique number UA to the access control centre CAA,
- composing at the access control centre CAA a message EMM containing the access right DB ciphered by the security key KA,
- transmitting to the operator B this message so that it be transmitted to the apparatus A,
- decoding this message EMM by the security unit SM by means of the security key KA and storing the transmission key TB and the access right DB to the service in the security unit SM,
- deciphering the control-words CW of the specific service in the security unit SM thanks to the transmission key TB.

2. Control access method according to claim 1, **characterized in that** the specific service proposal is transmitted by the operator B.

3. Control access method according to claim 1, **characterized in that** the specific service proposal is transmitted by the broadcaster B

4. Control access method according to claims 1 to 3, **characterized in that** the security unit (SM) is common to the security operations of the operator and to the security operations of the broadcaster.

5. Control access method according to claims 1 to 3, **characterized in that** the security unit (SM) is dedicated to the broadcaster security operations.

6. Control access method according to one of claims 1 to 5, **characterized in that** the broadcast of broadcaster A is different from the broadcast area of the broadcaster B as well as the respective access control systems (CAA, CAB).

7. Control access method according to one of the preceding claims **characterized in that** the data exchanged between the operator A and the operator B are ciphered.

8. Control access method according to one of the preceding claims **characterized in that** the ciphering system, the description of a service and of the corresponding right, and the ciphering of a message ECM comprising the control words (CW) by a transmission key are common for all the broadcasters.

## Patentansprüche

1. Verfahren der Kontrolle des Zugriffs auf eine Übertragung spezieller Dienste durch den Verteiler B, die mit Kontrollwörtern CW verschlüsselt sind und einseitig gerichtet gesendet werden, wobei die Rechte des Zugriffs DB auf diese gesendeten Dienste durch ein Zugriffskontrollzentrum CAB verwaltet werden und einen Übermittlungsschlüssel TB umfassen, der eine Entschlüsselung der Kontrollwörter CW ermöglicht, und wobei diese Übertragung von einem mobilen Endgerät A empfangen wird, das lokal an eine Sicherheitseinheit SM angeschlossen ist, die eine eindeutige ID-Nummer UA sowie einen Sicherheitsschlüssel KA für die Übermittlung gesicherter Daten umfasst, während dieses Gerät A an einen Telefoniebetreiber B angeschlossen ist und zu Beginn für die Übertragung spezieller, gesendeter Dienste bei einem anderen Zugriffskontrollzentrum CAA registriert wurde, und dieses Verfahren umfasst:
- durch den Verteiler B eine Beschreibung des Dienstes an das Gerät A zu übermitteln,
- durch den Betreiber B die Bestellung eines Dienstes zu empfangen, die vom Gerät A kommt und die eindeutige ID-Nummer UA umfasst,
- diese Bestellung an das Zugriffskontrollzentrum CAB zu übermitteln,
- durch das Zugriffskontrollzentrum CAB das Zugriffsrecht DB und die eindeutige Nummer UA an das Zugriffskontrollzentrum CAA zu übermitteln,
- durch das Zugriffskontrollzentrum CAA eine EMM-Nachricht zu verfassen, die das mit dem Sicherheitsschlüssel KA verschlüsselte Recht DB umfasst,
- dem Betreiber B diese Nachricht zu übermitteln, damit sie an das Gerät A übermittelt wird,
- durch die Sicherheitseinheit SM diese EMM-Nachricht mit dem Sicherheitsschlüssel KA zu entschlüsseln und den Übermittlungsschlüssel TB sowie das Recht des Zugriffs auf den Dienst in der Sicherheitseinheit SM zu speichern,
- die Kontrollwörter CW des speziellen Dienstes dank des Übermittlungsschlüssels TB in der Sicherheitseinheit SM zu entschlüsseln.

2. Verfahren der Übertragung nach Anspruch 1, **dadurch gekennzeichnet, dass** das Angebot eines speziellen Dienstes durch den Betreiber B übermittelt wird.

3. Verfahren der Übertragung nach Anspruch 1, **dadurch gekennzeichnet, dass** das Angebot eines speziellen Dienstes durch den Verteiler B übermittelt wird.

4. Verfahren der Übertragung nach Ansprüchen 1 bis 3, **dadurch gekennzeichnet, dass** die Sicherheitseinheit den Sicherheitsoperationen des Betreibers und den Sicherheitsoperationen des Verteilers gemeinsam dient.

5. Verfahren der Übertragung nach Ansprüchen 1 bis 3, **dadurch gekennzeichnet, dass** die Sicherheitseinheit den Sicherheitsoperationen des Verteilers eigen ist.

6. Verfahren nach einem der Ansprüche 1 bis 5, **dadurch gekennzeichnet, dass** sich der Verbreitungsbereich des Verteilers A vom Verbreitungsbereich des Verteilers B ebenso wie die betreffenden Zugriffskontrollsysteme (CAA, CAB) unterscheidet.

7. Verfahren nach einem der vorangehenden Ansprüche, **dadurch gekennzeichnet, dass** die zwischen dem Betreiber A und dem Betreiber B ausgetauschten Daten verschlüsselt werden.

8. Verfahren nach einem der vorangehenden Ansprüche, **dadurch gekennzeichnet, dass** das System der Verschlüsselung, die Beschreibung eines Dienstes und der entsprechenden Rechte sowie die Verschlüsselung einer die Kontrollwörter (CW) umfassenden Nachricht (ECM) mit einem Übermittlungsschlüssel allen Verteilern gemein sind.
